# EUROPÄISCHE PATENTSCHRIFT

(11) **EP 3 330 494 B1**
(45) Veröffentlichungstag und Bekanntmachung des Hinweises auf die Patenterteilung: **27.11.2019**
(21) Anmeldenummer: 17204077.6
(22) Anmeldetag: 28.11.2017
(51) Int. Cl.: F01D 21/04, F02C 9/28, G01L 5/00, F16C 19/52, F01D 25/16

(54) **ANORDNUNG, TURBOMASCHINE UND VERFAHREN ZUR ERKENNUNG EINES WELLENBRUCHS**
ARRANGEMENT, TURBOMACHINE AND METHOD OF DETECTION A SHAFT RUPTURE
DISPOSITIF, TURBOMACHINE ET PROCÉDÉ DE DÉTECTION D'UNE RUPTURE D'ARBRE

(30) Priorität: 02.12.2016 EP 16202041; 28.07.2017 DE 102017213090
(43) Veröffentlichungstag der Anmeldung: 06.06.2018
(73) Patentinhaber: Rolls-Royce Deutschland Ltd & Co KG, 15827 Blankenfelde-Mahlow (DE)
(72) Erfinder: LÜCK, Rudolf, 15827 Blankenfelde-Mahlow (DE)
(74) Vertreter: Maikowski & Ninnemann Patentanwälte Partnerschaft mbB

(56) Entgegenhaltungen:
- EP-A1- 3 015 659
- EP-A2- 1 148 261
- DE-A1- 19 857 552
- DE-A1-102010 024 850
- US-A- 4 578 018

## Beschreibung

Die Erfindung betrifft eine Anordnung zur Erkennung eines Wellenbruchs nach Anspruch 1, eine Turbomaschine und ein Verfahren zur Erkennung eines Wellenbruchs einer Welle nach Anspruch 14.

Im Falle außergewöhnlicher Belastungen einer Welle kann es zu einem Bruch der Welle kommen. Ein Wellenbruch kann Folgeschäden auslösen, die durch die rechtzeitige Einleitung von Gegenmaßnahmen minimiert oder gar abgewendet werden können. Um nach möglichst kurzer Zeit Gegenmaßnahmen treffen zu können, ist es nötig, den Bruch der Welle schnell und verlässlich zu erkennen. Insbesondere wenn die Anordnung Teil einer Turbomaschine ist, kann als Gegenmaßnahme beispielsweise eine Treibstoffzufuhr der Turbomaschine unterbrochen werden.

Die DE 198 57 552 A1 betrifft ein Verfahren zum Erkennen eines Wellenbruches in einer Strömungskraftmaschine mit dem Ziel, danach eine geeignete drehzahlbegrenzende Maßnahme, insbesondere eine Brennstoffschnellabschaltung bei einer Flug-Gasturbinenanlage, einzuleiten, wobei ein drehmomentabgebender Turbinenläufer und ein drehmomentaufnehmendes Aggregat über die hinsichtlich eines Bruches zu überwachende, im wesentlichen endseitig in zumindest zwei Wälzlagern gelagerte Welle miteinander verbunden sind. Dabei werden die Drehfrequenzen der beiden Wellenenden in den Wälzlagern der hinsichtlich eines Bruches zu überwachenden Welle kontinuierlich und im Wesentlichen in Echtzeit ermittelt und miteinander verglichen.

Die EP 1 148 261 A2 beschreibt Wälzlager mit mindestens einer in Wälzlagerkomponenten integrierten Erfassungseinheit, die über Antennen funkabfragbar ist, wobei die Erfassungseinheit mit mindestens einem nach dem SAW- und/oder BAW-Prinzip arbeitenden Bauelement die Längenänderungen und/oder Temperaturänderungen im Material des Wälzlagers erfasst.

In der DE 10 2010 024 850 A1 ist ein Verfahren zur Ermittlung der Drehzahl eines gegenüber einer Lagerstelle rotierbaren Bauelementes mit wenigstens einem piezoresistiven Messaufnehmer beschrieben, wobei der wenigstens eine piezoresistive Messaufnehmer durch Beschichtung wenigstens eines von bei der Rotation des Bauelementes kraftbeaufschlagten Bereichs einer bezüglich der Rotation des Bauelementes statischen Oberfläche der Lagersteile in Dünnschichttechnik hergestellt ist.

Ein der Anmelderin aus der Praxis bekanntes mechanisches System zur Einleitung von Gegenmaßnahmen nach einem Wellenbruch bei einer Turbomaschine verwendet die Kombination der Welle mit einer gemeinsam mit der Welle rotierenden und koaxialen Referenzwelle. In der Welle und der Referenzwelle sind Ausnehmungen vorgesehen, die im normalen Betriebszustand der Welle außer Deckung liegen. Bricht die Welle, gelangen die Ausnehmungen in Deckung miteinander und ein Haken oder Bügel greift durch die Ausnehmungen hindurch. Diese Bewegung des Bügels unterbricht die Treibstoffzufuhr.

Derartige mechanische Lösungen weisen allerdings ein hohes Gewicht und einen komplexen Aufbau auf und sind zudem in der heißen Umgebung des Triebwerks angeordnet.

Es besteht die Aufgabe, eine verbesserte Anordnung und ein verbessertes Verfahren zur Erkennung eines Wellenbruchs bereitzustellen, die insbesondere einen besonders einfachen Aufbau aufweist.

Die Aufgabe wird durch eine Anordnung mit den Merkmalen des Anspruchs 1 gelöst.

Danach umfasst eine derartige Anordnung zur Erkennung eines Wellenbruchs zumindest eine Welle und zumindest ein Lager (Festlager), an dem die Welle um eine Rotationsache drehbar gelagert ist, sowie zumindest einen Kraftsensor oder mehrere Kraftsensoren (insbesondere in Form eines oder jeweils eines Verformungssensors) und eine Auswerteeinheit. Der/die Kraftsensor(en) ist/sind am Lager angeordnet, insbesondere daran festgelegt, und zur Messung einer Axialkraftkomponente einer von der Welle auf das Lager ausgeübten Kraft eingerichtet, wobei die Axialkraftkomponente entlang der Rotationsache der Welle ausgerichtet ist. Die Auswerteeinheit ist dazu ausgebildet, Messwerte des/der Kraftsensors/Kraftsensoren bezüglich der Axialkraftkomponente zu empfangen und anhand eines Vergleichs zumindest zweier Messwerte (insbesondere Messwerte aus einem zeitlichen Verlauf der Messwerte) zu ermitteln, ob eine (durch einen Wellenbruch bedingte) Änderung der Axialkraftkomponente vorliegt oder nicht, insbesondere ob eine Änderung der Orientierung oder Richtung der Axialkraftkomponente vorliegt und/oder ob eine Änderung der Axialkraftkomponente (oder ihr Betrag) einen vorgegebenen oder vorgebbaren Schwellenwert übersteigt, um einen Wellenbruch der Welle zu erkennen. Liegt die Änderung (oder ihr Betrag) unterhalb des Schwellenwerts, kann die Auswerteeinheit eingerichtet sein zu erkennen, dass kein Wellenbruch der Welle vorliegt. Die Auswerteeinheit ist eingerichtet, ein Signal auszugeben, das einen Wellenbruch anzeigt, wenn die Auswerteeinheit einen Wellenbruch erkannt hat. Der zeitliche Verlauf umfasst z.B. zumindest zwei Messwerte und gibt beispielsweise die zeitliche Veränderung der Messwerte an.

Durch eine derart verbesserte Anordnung kann auf viele bewegliche mechanische Teile verzichtet werden, etwa auf einen in Ausnehmungen eingreifenden Bügel. Hierdurch ist ein wesentlich einfacherer Aufbau der Anordnung möglich. Darüber hinaus kann die Funktion der Anordnung während des laufenden Betriebs der Welle getestet werden, etwa durch Überprüfung der Messwerte des Kraftsensors, z.B. durch Vergleich mit vorherigen Messwerten, insbesondere des Kraftsensors.

Nach der Erkennung eines Wellenbruchs können durch die Anordnung geeignete Gegenmaßnahmen eingeleitet werden, z.B. eine Sperrung einer Treibstoffzufuhr. Die Einleitung der Gegenmaßnahmen erfolgt bevorzugt durch das im Falle eines Wellenbruchs ausgegebene Signal. Mit der beschriebenen Anordnung ist es möglich, die Gegenmaßnahmen mit besonders geringer Zeitverzögerung einzuleiten, was die Effektivität der Maßnahmen erhöhen kann.

Der Anordnung liegt der Gedanke zugrunde, eine Veränderung der Kraft, welche die Welle entlang ihrer Rotationsrichtung auf das Lager überträgt, zu detektieren. Aus einer solchen Veränderung lässt sich auf einen Bruch der Welle schließen. Durch einen Wellenbruch kann es z.B. zu einer axialen Lastumkehr am Lager kommen. Die Auswerteeinheit erkennt eine solche Lastumkehr an der Änderung der Axialkraftkomponente, insbesondere an einer Änderung der Orientierung der Axialkraftkomponente.

Das Lager kann ein stillstehendes Lagerteil und ein drehbares Lagerteil umfassen. Dabei ist das drehbare Lagerteil gemeinsam mit der Welle bezüglich dem stillstehenden Lagerteil um die Rotationsachse der Welle drehbar.

Gemäß einer Weiterbildung ist der Kraftsensor am stillstehenden Lagerteil angeordnet. Auf diese Weise ist ein einfacher Anschluss des Kraftsensors an die Auswerteeinheit möglich.

Die Anordnung kann zusätzlich zum Kraftsensor einen oder mehrere weitere Kraftsensoren umfassen. Die weiteren Kraftsensoren können an demselben Lager angeordnet sein wie der (erste) Kraftsensor. Der Kraftsensor und zumindest ein weiterer Kraftsensor können an axial gegenüberliegenden Abschnitten oder Seiten des Lagers, insbesondere des stillstehenden Lagerteils angeordnet sein. Die Auswerteeinheit ist auch eingerichtet, Messwerte von dem weiteren Kraftsensor zu empfangen. Die Auswerteeinheit kann z.B. dann einen Wellenbruch der Welle erkennen, wenn die Axialkraftkomponente am (ersten) Kraftsensor zunimmt und gleichzeitig am weiteren Kraftsensor abnimmt (oder umgekehrt). Auf diese Weise ist eine besonders präzise Messung möglich. Einer oder beide Kraftsensoren sind z.B. jeweils als Piezoelement, als Dehnungsmesselement (insbesondere in Form eines Dehnungsmessstreifens), als piezoresistives Element, als Beschleunigungssensor und/oder als Abstandssensor ausgebildet. Möglich ist auch eine Kombination von verschiedenen Kraftsensoren, z.B. von zumindest einem Piezoelement mit zumindest einem Dehnungsmesselement. Alternativ sind alle Kraftsensoren ähnlich ausgebildet, z.B. vom selben Typ.

Insgesamt kann die Anordnung eine gerade Anzahl von (ersten und weiteren) Kraftsensoren umfassen. Diese können jeweils auf gegenüberliegenden Seiten oder Abschnitten des Lagers angeordnet sein. Konkret kann vorgesehen sein, dass die Anordnung mehrere (erste) Kraftsensoren und mehrere weitere Kraftsensoren umfasst, wobei die Anzahl von (ersten) Kraftsensoren gleich der Anzahl von weiteren Kraftsensoren sein kann, sodass eine symmetrische Messanordnung erzielbar ist.

Das Lager ist beispielsweise ein Kugellager, insbesondere ein Schrägkugellager. Das stillstehende Lagerteil kann dann z.B. ein Außenring des Kugel- oder Schrägkugellagers sein. Das Kugel- oder Schrägkugellager kann die Welle umgreifen. Schrägkugellager sind besonders geeignet, Kräfte entlang der Rotationsachse der Welle zu übertragen. Der Kraftsensor kann so angeordnet sein, dass er periodische Kräfte durch vorbeirollende Kugeln des Lagers erfasst. Beispielsweise ist der Kraftsensor auf oder in die Struktur des Lagers oder einer Lagerhalterung des Lagers integriert. Da Kugellager allgemein eine Vielzahl von Kugeln umfassen, kann eine Veränderung der periodischen Kräfte infolge eines Wellenbruchs bereits nach kürzester Zeit ermittelt werden, z.B. nach einer Drehung der Welle um nur wenige Grad. Werden mehrere in Umfangsrichtung versetzt angeordnete Kraftsensoren vorgesehen, kann diese Zeit noch verringert werden.

Die Auswerteeinheit kann eingerichtet sein, anhand eines Vergleichs zumindest eines Messwerts des Kraftsensors mit einem vorbestimmten oder vorbestimmbaren Vergleichswert festzustellen, ob eine Änderung der Axialkraftkomponente vorliegt und/oder um die Stärke der Änderung zu bestimmen. Mit diesen Informationen kann die Auswerteeinheit einen Wellenbruch der Welle erkennen. Der Vergleichswert ist beispielsweise ein vorgegebener oder vorgebbarer Vergleichswert. Alternativ ist der Vergleichswert ein vorangegangener Messwert des Kraftsensors oder ein gleichzeitiger oder vorangegangener Messwert des weiteren Kraftsensors. Hierdurch ist eine besonders einfache Feststellung der Änderung erzielbar.

Die Auswerteeinheit kann eine Einrichtung umfassen, die zur Bestimmung von Extremwerten eines periodischen Signalverlaufs der Messwerte des Kraftsensors oder des Kraftsensors und des weiteren Kraftsensors eingerichtet ist. Ist der Signalverlauf periodisch, z.B. aufgrund von am Sensor vorbeirollenden Kugeln des als Kugellager, insbesondere als Schrägkugellager ausgebildeten Lagers, kann so ein besser vergleichbarer Wert ermittelt werden. Dieser kann zudem eine besonders hohe Genauigkeit aufweisen.

Die Auswerteeinheit ist gemäß einer Weiterbildung dazu ausgebildet, anhand eines Vergleichs zumindest eines Extremwerts mit einem Vergleichswert festzustellen, ob eine Änderung der Axialkraftkomponente vorliegt oder nicht, um einen Wellenbruch der Welle zu erkennen. Beispielsweise erkennt die Auswerteeinheit einen Wellenbruch, wenn eine Änderung vorliegt, insbesondere eine Änderung, die größer ist als ein vorgegebener Schwellenwert.

Der Vergleichswert ist z.B. ein vorangegangener Extremwert, ein Extremwert des weiteren Kraftsensors oder ein vorgegebener oder vorgebbarer Schwellenwert.

Gemäß einem weiteren Aspekt wird eine Turbomaschine bereitgestellt, die eine Anordnung nach einer beliebigen hierin beschriebenen Ausgestaltung umfasst. Die Turbomaschine oder Strömungsmaschine ist insbesondere in Form eines Flugzeugtriebwerks ausgebildet. Hierbei wird durch Einsatz der beschriebenen Anordnung ein besonders einfacher Aufbau erreicht.

Erkennt die Anordnung einen Wellenbruch, kann sie geeignete Gegenmaßnahmen einleiten, z.B. um mögliche Folgeschäden abzuwenden oder zu minimieren, etwa eine Sperrung einer Treibstoffzufuhr, eine Entleerung eines Treibstoffzulaufes über ein Ventil durch Ansteuern des Ventils und/oder eine Verstellung von variablen Leitschaufeln (VSV, variable stator vanes) auf geringen Luftdurchsatz.

Die Turbomaschine weist eine Hauptströmungsrichtung auf. Die Hauptströmungsrichtung ist z.B. parallel zur Rotationsachse ausgerichtet. Die Hauptströmungsrichtung erstreckt sich von einem Strömungseinlass der Turbomaschine zu einem Strömungsauslass, insbesondere einer Düse. Das Lager ist bezüglich der Hauptströmungsrichtung stromauf eines weiteren Lagers angeordnet, wobei die Welle auch an dem weiteren Lager um ihre Rotationsachse drehbar gelagert ist. Anders als insbesondere mechanische Lösungen zur Erkennung eines Wellenbruchs benötigt der Kraftsensor der Anordnung (der als Verformungssensor ausgebildet sein kann) nur wenig Bauraum. Der Kraftsensor ist daher am dem Strömungseinlass zugewandten Lager anordenbar. Bei einer Turbomaschine ist dies regelmäßig die kältere Seite verglichen mit der Seite des Strömungsauslasses. Dies vereinfacht den Aufbau der Anordnung weiter, denn es müssen keine oder weniger Maßnahmen gegen eine Überhitzung z.B. der Kraftsensoren und/oder von Signalleitungen getroffen werden.

Das Lager ist beispielsweise ein Fanlager der einen Fan aufweisenden Turbomaschine.

Die Aufgabe wird auch durch ein Verfahren zur Erkennung eines Wellenbruchs einer Welle mit den Merkmalen des Anspruchs 14 gelöst. Das Verfahren weist die folgenden Schritte auf:
- Eine Welle wird bereitgestellt, die an einem Lager um eine Rotationsachse drehbar gelagert ist, wobei am Lager ein oder mehrere Kraftsensor(en) angeordnet ist/sind, der/die zur Messung einer von der Welle auf das Lager ausgeübten Axialkraftkomponente entlang der Rotationsachse der Welle eingerichtet ist/sind.
- Messwerte der Axialkraftkomponente werden mittels des/der Kraftsensors/Kraftsensoren erzeugt und bereitgestellt.
- Optional wird ein zeitlicher Verlauf der bereitgestellten Messwerte ermittelt. Hierzu werden zumindest zwei zeitlich aufeinanderfolgende Messwerte verwendet.
- Anhand eines Vergleichs zumindest zweier Messwerte, insbesondere aus dem zeitlichen Verlauf der Messwerte, wird ermittelt, ob eine Änderung der Axialkraftkomponente vorliegt oder nicht, insbesondere ob eine Änderung der Axialkraftkomponente (oder ihr Betrag) einen vorgegebenen oder vorgebbaren Schwellenwert übersteigt. Anhand des Ergebnisses dieser Ermittlung ist ein Wellenbruch der Welle erkennbar.
- Wird ein Wellenbruch erkannt, dann wird ein den Wellenbruch anzeigendes Signal ausgegeben.

Auf diese Weise ist es möglich, mit besonders einfachen Mitteln einen Wellenbruch der Welle zu erkennen und mit besonders geringer Verzögerung geeignete Gegenmaßnahmen einzuleiten.

In dem Verfahren kann eine Anordnung oder eine Turbomaschine gemäß einer beliebigen hierin beschriebenen Ausführung verwendet werden.

Im Zusammenhang mit den in den Figuren dargestellten Ausführungsbeispielen wird die Erfindung erläutert. Dabei zeigen
- Fig. 1: eine schematische Darstellung eines Flugzeugtriebwerkes als Ausführungsform einer Turbomaschine;
- Fig. 2A, 2B: schematische Darstellungen einer Anordnung zur Erkennung eines Wellenbruchs mit zwei Kraftsensoren oder Verformungssensoren in einer Querschnittsansicht entlang der Rotationsachse;
- Fig. 3: eine schematische Darstellung einer Anordnung zur Erkennung eines Wellenbruchs mit einem Kraftsensor in einer Querschnittsansicht entlang der Rotationsachse;
- Fig. 4: eine schematische Darstellung einer Anordnung zur Erkennung eines Wellenbruchs mit einem Kraftsensor in einer Querschnittsansicht entlang der Rotationsachse;
- Fig. 5A, 5B: schematische Darstellungen von Signalverläufen von Kraftsensoren; und
- Fig. 6: ein Verfahren zur Erkennung eines Wellenbruchs einer Welle.

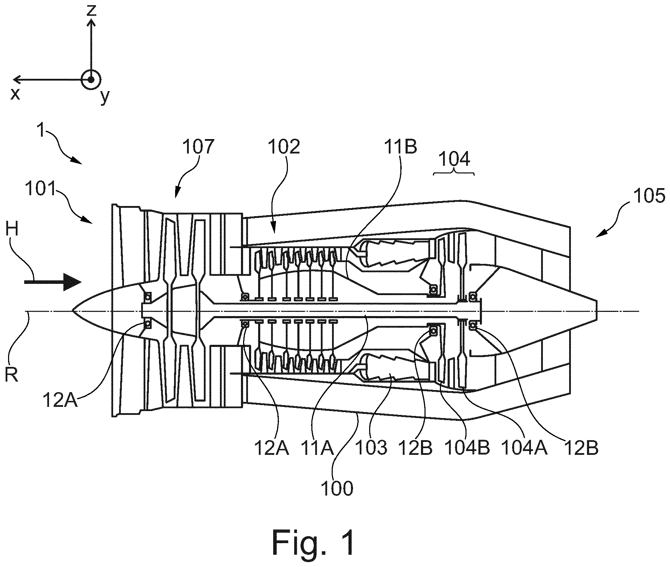

Fig. 1 zeigt eine Turbomaschine 1 in der Ausführungsform eines Flugzeugtriebwerks für ein Flugzeug. Die Turbomaschine 1 umfasst mehrere, vorliegend zwei um eine gemeinsame Rotationsachse R drehbare Wellen 11A, 11B. Die Wellen 11A, 11B sind innerhalb eines Gehäuses 100 der Turbomaschine 1 angeordnet. Das Gehäuse 100 definiert einen Lufteinlauf 101 der Turbomaschine 1.

Durch den Lufteinlauf 101 strömt ein Luftstrom in die Turbomaschine 1. Die Turbomaschine 1 weist eine axiale Hauptströmungsrichtung H auf. Die Hauptströmungsrichtung H verläuft im Wesentlichen entlang der Rotationsachse R der Wellen 11A, 11B. Im Wesentlichen in Richtung der Hauptströmungsrichtung H gesehen umfasst die Turbomaschine 1 nach dem Lufteinlauf 101 einen Fan 107, einen Verdichter 102, eine Brennkammer 103, eine Turbine 104 und eine Düse 105.

Die Turbomaschine 1 ist vorliegend zweistufig ausgeführt. Eine der Wellen 11A, 11B dient als Niederdruckwelle 11A, die andere als Hochdruckwelle 11B. An der Niederdruckwelle 11A sind der Fan 107 sowie eine Niederdruckturbine 104A der Turbine 104 festgelegt. An der Hochdruckwelle 11B sind der Verdichter 102 sowie eine Hochdruckturbine 104B der Turbine 104 festgelegt.

Die Turbomaschine 1 arbeitet in an sich bekannter Weise. Der Fan 107 und der Verdichter 102 verdichten den durch den Lufteinlauf 101 einlaufenden Luftstrom und führen ihn entlang der Hauptströmungsrichtung H zur Verbrennung in die Brennkammer 103. Aus der Brennkammer 103 austretende heiße Verbrennungsgase werden in der Hochdruckturbine 104B und in der Niederdruckturbine 104A entspannt, bevor sie durch die Düse 105 austreten. Die Düse 105 sorgt für eine Restentspannung der austretenden heißen Verbrennungsgase und für eine Vermischung mit Sekundärluft, wobei der austretende Luftstrom beschleunigt wird.

Die Niederdruckturbine 104A treibt den Fan 107 über die Niederdruckwelle 11A an. Die Hochdruckturbine 104B treibt den Verdichter 102 über die Hochdruckwelle 11B an.

Beide Wellen 11A, 11B sind über geeignete Lager 12A, 12B gegenüber dem Gehäuse 100 der Turbomaschine 1 um die Rotationsachse R drehbar gelagert. Das Gehäuse 100 ist fest mit dem Flugzeug verbindbar.

Gemäß Fig. 1 weisen die Niederdruckwelle 11A und die Hochdruckwelle 11B an ihrem jeweiligen dem Lufteinlauf 101 zugewandten Ende jeweils ein vorderes Lager 12A auf. Die vorderen Lager 12A sind jeweils z.B. als Kugellager, insbesondere als Schrägkugellager ausgebildet. An ihrem jeweiligen dem Luftauslass 105 zugewandten Ende umfassen die Niederdruckwelle 11A und die Hochdruckwelle 11B jeweils ein hinteres Lager 12B. Die hinteren Lager 12B sind jeweils z.B. als Wälzlager (Loslager) ausgebildet.

Die Hochdruckwelle 11B ist als Hohlwelle ausgebildet. Die Niederdruckwelle 11A ist innerhalb der Hochdruckwelle 11B angeordnet.

Beide Wellen 11A, 11B weisen jeweils eine Antriebsseite und eine Abtriebsseite auf. Die Antriebsseiten werden durch die jeweils zugeordneten Turbinenstufen 104A, 104B angetrieben. Die Abtriebsseiten werden durch die jeweilige Antriebsseite angetrieben und treiben den Fan 107 beziehungsweise den Verdichter 102 an.

Unvorhergesehene Einflüsse, insbesondere zu große Kräfte oder Drehmomente zwischen der Antriebsseite und der Abtriebsseite einer der Wellen 11A, 11B, können zu einem Bruch der Welle 11A, 11B führen.

Die Turbomaschine 1 umfasst zumindest eine Anordnung zur Erkennung eines Wellenbruchs, um nach einem Wellenbruch einer der Wellen 11A, 11B oder mehrerer Wellen 11A, 11B der Turbomaschine 1 Gegenmaßnahmen einzuleiten und somit die Sicherheit während des Betriebs der Turbomaschine 1 zu verbessern. Die Anordnung wird anhand der nachfolgenden Figuren näher erläutert werden.

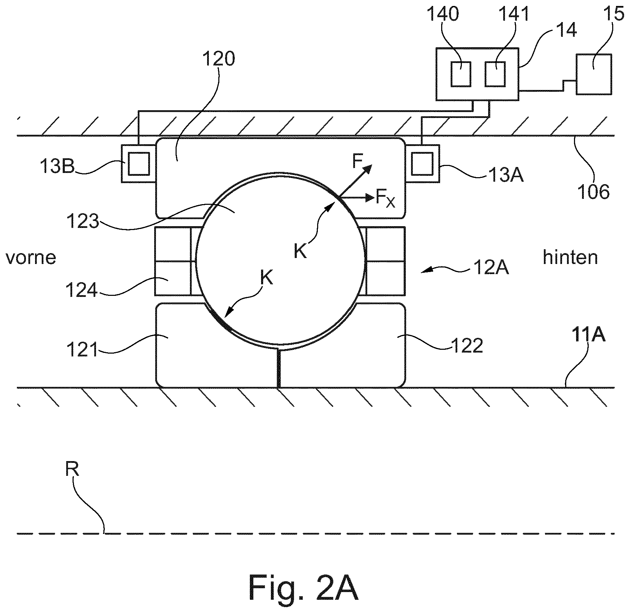

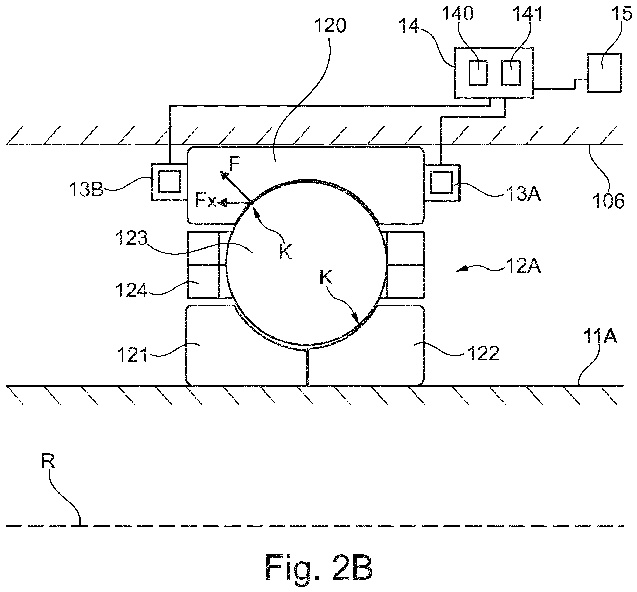

Fig. 2A und 2B zeigen die Anordnung zur Erkennung eines Bruchs einer oder mehrerer der Wellen 11A, 11B der Turbomaschine 1, vorliegend am Beispiel der Niederdruckwelle 11A, wobei die nachfolgenden Ausführungen entsprechend auch für die Hochdruckwelle 11B oder allgemein für eine oder mehrere beliebige Wellen 11A, 11B der Turbomaschine 1 gelten.

Die Niederdruckwelle 11A ist am Lager 12A bezüglich eines triebwerksfesten Bauteils 106 um die Rotationsachse R drehbar gelagert. Das Lager 12A ist vorliegend als Fanlager ausgebildet, wobei auch andere Anordnungen möglich sind. Wie in Fig. 1 veranschaulicht, ist das Lager 12A benachbart des Fans 107 angeordnet. Das triebwerksfeste Bauteil 106 ist z.B. mit dem Gehäuse 100 der Turbomaschine 1 fest verbunden und/oder fest mit dem Flugzeug verbunden oder verbindbar.

Die Anordnung umfasst zwei Sensoren, vorliegend zwei Kraftsensoren 13A, 13B (Die Kraftsensoren können insbesondere Sensoren sein, die zur Messung einer Verformung ausgebildet sind), die jeweils mit einer Auswerteeinheit 14 wirkverbunden sind, im gezeigten Beispiel mittels jeweils eines Signalleiters. Optional umfasst die Anordnung mehr als zwei Sensoren.

Das Lager 11A umfasst ein stillstehendes Lagerteil in Form eines Außenrings 120 und zumindest ein drehbares Lagerteil, vorliegend zwei drehbare Lagerteile in Form eines ersten Innenringteils 121 und eines zweiten Innenringteils 122. Der Außenring 120 ist fest mit dem triebwerksfesten Bauteil 106 verbunden, insbesondere daran befestigt. Die Innenringteile 121, 122 sind fest (insbesondere drehfest) mit der Niederdruckwelle 11A verbunden, vorzugsweise daran befestigt. Das Lager 11A ist als Schrägkugellager mit einer Vielzahl von Kugeln 123 ausgebildet. Ein Käfig 124 hält die Kugeln 123 in geeignetem Abstand zueinander.

Bei einigen Triebwerken ist eine axiale Last auf das als Fanlager dienende Lager 12A, insbesondere bei Drehzahlen ab einer Leerlaufdrehzahl, in Richtung der Turbine 104 gerichtet. Vorliegend wird dieser Fall betrachtet, wobei aber auch Turbomaschinen existieren, bei denen die axiale Last im Nominalfall am Fanlager nach vorn, also in Richtung des Lufteinlasses gerichtet ist. Auch für solche Turbomaschinen ist die beschriebene Anordnung einsetzbar, wobei lediglich die beschriebenen Axialkräfte in die entgegengesetzte Richtung weisen.

Aus der axialen Last der Niederdruckwelle 11A auf das Lager 12A ergibt sich für jede Kugel 123 des Lagers 12A eine Axialkraftkomponente Fx. Die Axialkraftkomponente Fx ist parallel zur Rotationsachse R ausgerichtet. Zusammen mit radial gerichteten Kräften, z.B. Fliehkräften, auf die Kugeln 123, ergibt sich eine Kraft F, die jede der Kugeln 123 auf den Außenring 120 ausübt. Das erste Innenringteil 121 kontaktiert die Kugeln 123 jeweils an einem Kontaktbereich K, an dem die axiale Last von der Niederdruckwelle 11A in die Kugeln 123 eingeleitet wird. Auf der gegenüberliegenden Seite der Kugeln 123 kontaktieren diese den Außenring 120 jeweils an einem äußeren Kontaktbereich K, an dem jede der Kugeln 123 die Kraft F mit der Axialkraftkomponente Fx in den Außenring 120 einleitet.

Ein erster Kraftsensor 13A der zwei Kraftsensoren 13A, 13B der Anordnung im Beispiel gemäß Fig. 2A, 2B ist derart am Lager 12A angeordnet, dass er einen Messwert für die Axialkraftkomponente Fx messen kann, etwa durch Verformung des Lagers 12A durch eine am Kraftsensor 13A, 13B vorbei rollende Kugel 123. Die Stärke der Axialkraftkomponente Fx beeinflusst den Messwert des Kraftsensors 13A. Im Beispiel gemäß Fig. 2A, 2B ist der erste Kraftsensor 13A auf der in Hauptströmungsrichtung H stromabwärts gerichteten Seite (Stirnseite) des Lagers 12A angeordnet. Der erste Kraftsensor 13A kann z.B. in das Material des Außenrings 120 eingebracht oder an einer äußeren Oberfläche davon angeordnet sein. Vorzugsweise ist der erste Kraftsensor 13A am Außenring befestigt oder in diesen eingebettet.

Auf der dem ersten Kraftsensor 13A (insbesondere axial) gegenüberliegenden Seite ist ein zweiter Kraftsensor 13B der zwei Kraftsensoren 13A, 13B angeordnet. Da im Beispiel gemäß Fig. 2A, 2B der erste Kraftsensor 13A auf der stromabwärts gerichteten Seite des Lagers 12A angeordnet ist, ist der zweite Kraftsensor 13B dort an der in Hauptströmungsrichtung H stromaufwärts gerichteten Seite (Stirnseite) des Lagers 12A angeordnet.

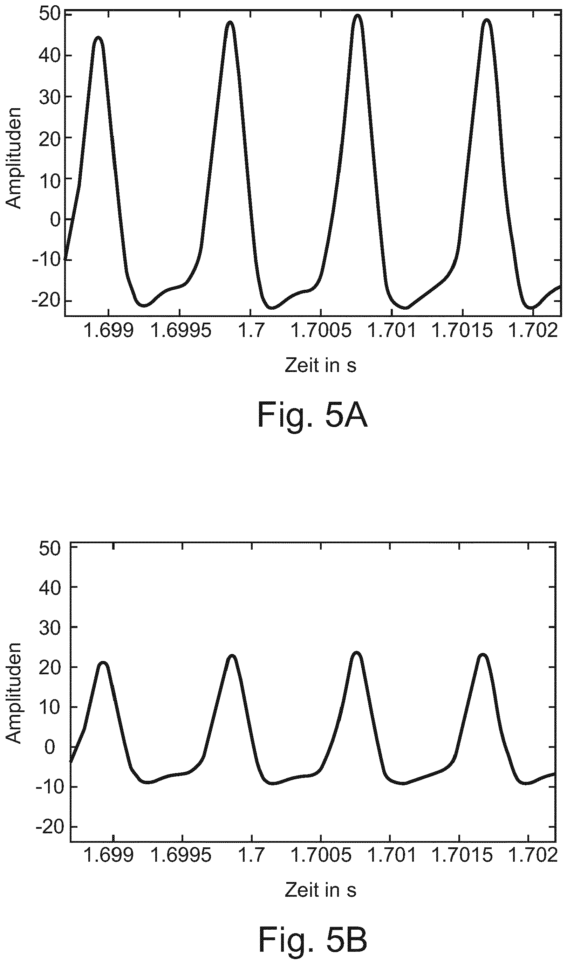

Fig. 5A zeigt einen möglichen zeitlichen Verlauf einer Vielzahl von Messwerten des ersten Kraftsensors 13A während eines bestimmungsgemäßen Betriebs der Turbomaschine 1. Auf der X-Achse ist die Zeit aufgetragen, auf der Y-Achse sind die Amplituden der Messwerte aufgetragen. Die Amplituden sind in willkürlichen Einheiten angegeben. Die Vielzahl der einzelnen Messwerte ist zu einer kontinuierlichen Linie verbunden, die den Verlauf der Messwerte anzeigt. Jedes Mal wenn eine der Kugeln 123 am Kraftsensor 13A vorbeirollt, übt sie die Kraft K auf den zwischen der Kugel 123 und dem Kraftsensor 13A liegenden Teil des Außenrings 120 aus, was zu einer Veränderung der Amplitude des Messwerts des Kraftsensor 13A führt. Dabei erfasst der Kraftsensor 13A die Kraft z.B. anhand der Verformung des Außenrings 120 durch die Kugel 123. Dadurch ergibt sich ein periodischer Verlauf der Messwerte des Kraftsensors 13A. Der periodische Verlauf der Messwerte des Kraftsensors 13A weist in regelmäßigen zeitlichen Abständen Maxima oder Peaks auf. Die Länge einer Signalperiode hängt von der Rotationsgeschwindigkeit der Niederdruckwelle 11A ab.

Fig. 5B zeigt einen möglichen zeitlichen Verlauf einer Vielzahl von Messwerten des zweiten Kraftsensors 13B während des bestimmungsgemäßen Betriebs der Turbomaschine 1 in einer Darstellung entsprechend Fig. 5A. Auch der zweite Kraftsensor erfasst einen periodischen Verlauf der Messwerte durch das Vorbeirollen der Kugeln 123. Im Vergleich zu den in Fig. 5A gezeigten Amplituden der Messwerte des ersten Kraftsensors 13A sind die Amplituden der Messwerte des zweiten Kraftsensors 13B aber kleiner. Beispielsweise erreichen die Maxima des Verlaufs der Messwerte des zweiten Kraftsensors 13B nur weniger als 60 % der Maxima des Verlaufs der Messwerte des ersten Kraftsensors 13A, insbesondere nur weniger als 20%.

Bricht die Niederdruckwelle 11A, führt das zu einer (insbesondere plötzlichen) Änderung der Axialkraftkomponente Fx. Beispielsweise wird eine entgegen der Hauptströmungsrichtung H gerichtete Kraft des Fans 107 nicht mehr von der eine entgegengesetzte Kraft ausübenden Niederdruckturbine 104A aufgewogen. Hierdurch können sich die Verhältnisse der Amplitudenhöhen der beiden Kraftsensoren 13A, 13B umkehren. Beispielsweise entspricht der Verlauf der Messwerte des ersten Kraftsensors 13A nach dem Wellenbruch nicht mehr dem in Fig. 5A gezeigten Verlauf, sondern dem gemäß Fig. 5B und der Verlauf der Messwerte des zweiten Kraftsensors 13B entspricht nach dem Wellenbruch nicht mehr dem in Fig. 5B gezeugten Verlauf, sondern dem gemäß Fig. 5A. Allgemein gesagt können durch den Wellenbruch der Verlauf der Messwerte des ersten Kraftsensors 13A zu niedrigeren Werten verschoben werden und der Verlauf der Messwerte des zweiten Kraftsensors 13B zu höheren Werten verschoben werden.

Diese Änderung des Verlaufs der Messwerte zeigt somit eine Änderung der Axialkraftkomponente Fx an. Die Änderung der Axialkraftkomponente Fx zeigt wiederum einen Wellenbruch der Niederdruckwelle 11A an, z.B. wenn sie einen vorgegebenen Betrag übersteigt. Die Auswerteeinheit 14 ist ausgebildet, anhand des Verlaufs der Messwerte eines der Kraftsensoren 13A, 13B oder beider Kraftsensoren 13A, 13B diese Änderung zu erfassen. Erfasst die Auswerteeinheit 14 eine solche Änderung, erkennt sie den Wellenbruch.

Beispielsweise erkennt die Auswerteeinheit 14 einen Wellenbruch an einer Umkehr eines Verhältnisses einer gemessenen Amplitudenhöhe des ersten Kraftsensors 13A zu einer gemessenen Amplitudenhöhe des zweiten Kraftsensors 13B.

Die Auswerteeinheit 14 umfasst optional einen Extremwertbestimmer, der Extremwerte, insbesondere die Maxima der Verläufe der Messwerte beider Kraftsensoren 13A, 13B ermitteln kann und bei der Verwendung der Anordnung ermittelt. Ein Komparator 141 der Auswerteeinheit 14 vergleicht einzelne Messwerte und/oder Extremwerte, insbesondere Maxima der Messwerte des ersten Kraftsensors 13A mit denjenigen des zweiten Kraftsensors 13B (oder von einer Gruppe von Kraftsensoren, insbesondere in Form von Verformungssensoren oder Beschleunigungssensoren, mit denjenigen einer weiteren Gruppe von Kraftsensoren, insbesondere in Form von Verformungssensoren oder Beschleunigungssensoren). Alternativ oder zusätzlich vergleicht der Komparator 141 einzelne Messwerte und/oder Extremwerte, insbesondere Maxima der Messwerte von einem der Kraftsensoren 13A, 13B oder von beiden Kraftsensoren 13A, 13B mit vorangegangenen Messwerten und/oder Extremwerten, insbesondere Maxima. Bei einem Überschreiten eines Schwellenwerts für die Änderung zwischen den Werten kann die Auswerteeinheit 14 einen Wellenbruch der Niederdruckwelle 11A erkennen.

Beispielsweise ist die Auswerteeinheit 14 ausgebildet, einen Wellenbruch zu erkennen, wenn einzelne Messwerte und/oder Extremwerte, insbesondere Maxima der Messwerte des ersten Kraftsensors 13A um einen vorbestimmten Wert oder einen vorbestimmten Anteil abfallen und des zweiten Kraftsensors 13B (insbesondere gleichzeitig) um einen vorbestimmten Wert oder einen vorbestimmten Anteil zunehmen.

In Reaktion auf die Erkennung eines Wellenbruchs kann die Auswerteeinheit 14 ein Signal ausgeben, das den Wellenbruch anzeigt, z.B. ein Alarmsignal, und/oder Gegenmaßnahmen einleiten, etwa eine Treibstoffzufuhr unterbrechen. Hierzu ist die Auswerteeinheit bei der Anordnung gemäß Fig. 2A, 2B (z.B. durch geeignete Signalleiter) mit einer Kraftstoffzufuhrsteuerung 15 der Turbomaschine 1 wirkverbunden. Alternativ oder zusätzlich können weitere Gegenmaßnahmen eingeleitet werden, wie etwa eine Verstellung von variablen Leitschaufeln auf geringen Luftdurchsatz und/oder eine Entleerung eines Treibstoffzulaufes über ein Ventil durch Ansteuern dieses Ventils.

Optional kann die Anordnung auch mehr als zwei Kraftsensoren 13A, 13B umfassen, insbesondere mehrere Paare von jeweils einem ersten und einem zweiten Kraftsensor 13A, 13B. Die Auswerteeinheit 14 kann dann Messwerte der mehreren Paare empfangen und auswerten. Auf diese Weise ist eine noch höhere Messgenauigkeit möglich.

Auch können die Kraftsensoren 13A, 13B oder weitere Kraftsensoren alternativ oder zusätzlich am Lager 12A der Hochdruckwelle 11B angeordnet und mit der Auswerteeinheit 14 wirkverbunden sein, um (auch) einen Wellenbruch der Hochdruckwelle 11B zu erfassen. Bei Turbomaschinen mit drei Wellen ist selbstverständlich auch eine entsprechende Wirkverbindung mit einem Lager einer Mitteldruckwelle möglich.

Einer oder beide Kraftsensoren 13A, 13B sind z.B. jeweils als Piezoelement, als Dehnungsmessstreifen, als piezoresistives Element, als Beschleunigungssensor und/oder als Abstandssensor, der die axiale Lage des Käfigs 124 oder die axiale Lage der Kugeln 123 misst, ausgebildet.

Die Auswerteeinheit 14 kann zudem ausgebildet sein, einen Lagerschaden des Lagers 11A zu erkennen, z.B. wenn sie im Verlauf der Messwerte von einem oder mehreren der Kraftsensoren 13A, 13B Schwingungen einer vorbestimmten Frequenz erkennt. Hierzu kann die Auswerteeinheit 14 z.B. ein Filter und/oder einen Frequenzanalysator umfassen. Ferner kann die Auswerteeinheit 14 dazu ausgebildet sein, einen Schub (Thrust) der Turbomaschine 1 zu bestimmen, insbesondere den durch den Fan 107 erzeugten Schub.

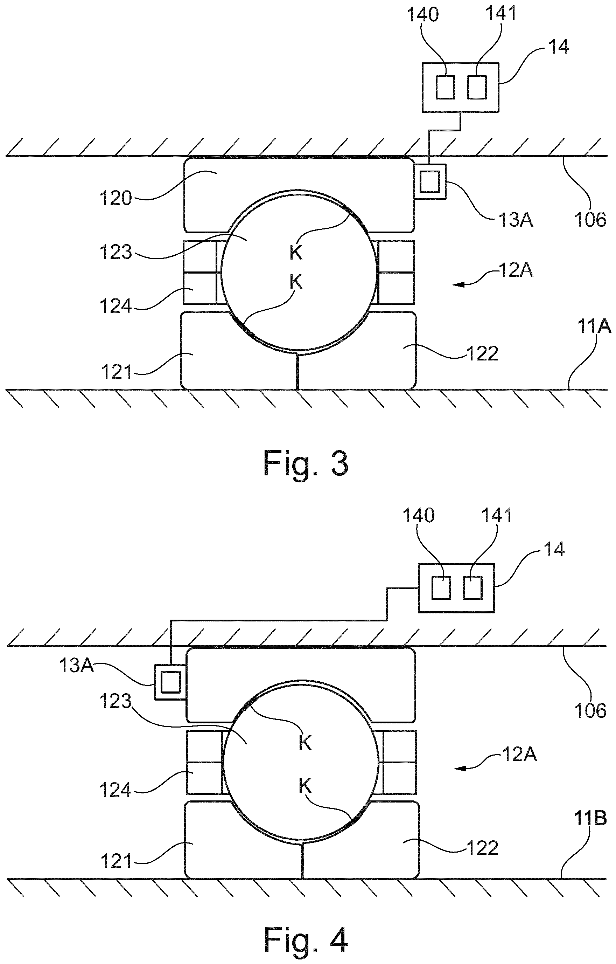

Fig. 3 zeigt eine Anordnung zur Erkennung eines Wellenbruchs, die sich von der in den Fig. 2A und 2B gezeigten Anordnung dadurch unterscheidet, dass nur ein Kraftsensor 13A vorgesehen ist. Dieser ist gemäß Fig. 3 auf der stromabwärts gerichteten Stirnseite des Lagers 12A angeordnet. Die Auswerteeinheit 14 erkennt eine Änderung der Axialkraftkomponente anhand einer Änderung des Verlaufs der Messwerte des Kraftsensors 13A, insbesondere eines Anstiegs oder Abfalls der Amplitude, z.B. von ermittelten Maxima. Dies kann durch Vergleich mit vorhergehenden Messwerten oder vorbestimmten Referenzwerten erfolgen. Die Auswerteeinheit 14 erkennt einen Wellenbruch z.B. dadurch, dass die Änderung der Axialkraftkomponente Fx einen vorbestimmten Schwellenwert übersteigt oder unterschreitet.

Fig. 4 zeigt eine Anordnung zur Erkennung eines Wellenbruchs, die sich von der in den Fig. 3 gezeigten Anordnung dadurch unterscheidet, dass der eine Kraftsensor 13A auf der stromaufwärts gerichteten Stirnseite des Lagers 12A angeordnet ist. Die Auswerteeinheit 14 erkennt eine Änderung der Axialkraftkomponente anhand einer Änderung des Verlaufs der Messwerte des Kraftsensors 13A, insbesondere eines Anstiegs oder Abfalls der Amplitude, z.B. von ermittelten Maxima. Ferner ist der Kraftsensor 13 gemäß Fig. 4 am (vorderen) Lager 12A der Hochdruckwelle 11B angeordnet.

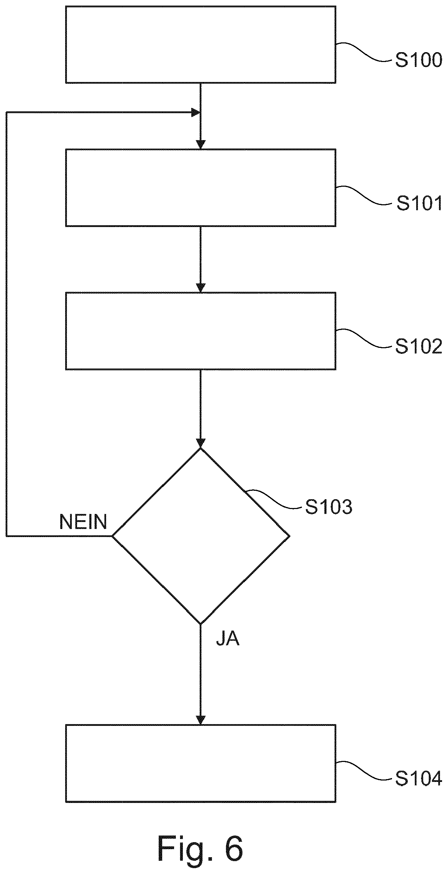

Fig. 6 zeigt ein Verfahren zur Erkennung eines Wellenbruchs einer Welle, insbesondere einer Welle 11A, 11B der Turbomaschine 1 gemäß Fig. 1, insbesondere unter Verwendung einer Anordnung gemäß Fig. 2A, 2B, gemäß Fig. 3 oder gemäß Fig. 4. Das Verfahren umfasst die nachfolgenden Schritte.

In Schritt S100 wird eine an einem Lager 12A um eine Rotationsachse R drehbar gelagerte Welle 11A, 11B bereitgestellt, wobei am Lager 12A zumindest ein Kraftsensor 13A angeordnet ist, insbesondere zwei Kraftsensoren 13A, 13B angeordnet sind, der/die zur Messung einer von der Welle 11A, 11B ausgeübten Axialkraftkomponente Fx entlang der Rotationsachse R der Welle 11A, 11B eingerichtet ist/sind.

In Schritt S101 werden mittels des oder der Kraftsensoren 13A, 13B Messwerte erzeugt, die für die Axialkraftkomponente Fx indikativ sind.

In Schritt S102 werden mehrere Messwerte, die von demselben oder von verschiedenen Kraftsensoren 13A, 13B stammen können, miteinander verglichen. Beispielsweise wird ein zeitlicher Verlauf der Messwerte des einen Kraftsensors 13A oder jedes der Kraftsensoren 13A, 13B bestimmt, was z.B. durch Erfassen mehrerer zeitlich aufeinanderfolgender Messwerte desselben Kraftsensors 13A, 13B erfolgen kann. Der Vergleich und/oder die Bestimmung des zeitlichen Verlaufs erfolgt insbesondere mittels der Auswerteeinheit 14, die die Messwerte von dem oder den Kraftsensoren 13A, 13B empfängt. Der Vergleich umfasst optional eine Differenzbildung zwischen zwei Messwerten.

In Schritt S103 wird, insbesondere mittels der Auswerteeinheit 14, anhand des Vergleichs der Messwerte, insbesondere anhand des zeitlichen Verlaufs der Messwerte, bestimmt, ob eine Änderung der Axialkraftkomponente Fx vorliegt. Hierdurch kann ein Wellenbruch der Welle 11A, 11B erkannt werden, z.B. durch die Auswerteeinheit 14, insbesondere wenn die Änderung einen bestimmten Betrag oder Schwellenwert übersteigt oder unterschreitet. Bei einem Vergleich von Messwerten verschiedener Kraftsensoren 13A, 13B wird ein Wellenbruch z.B. dadurch erkannt, dass der Messwert des weiter vorne (zum Fan 107 hin) angeordneten Kraftsensors 13A eine höhere Amplitude aufweist als der Messwert des weiter hinten angeordneten Kraftsensors 13B. Bei einem alternativen oder zusätzlichen Vergleich zeitlich aufeinanderfolgender Messwerte (desselben Kraftsensors oder verschiedener Kraftsensoren) in einem zeitlichen Verlauf wird ein Wellenbruch z.B. dadurch erkannt, dass die Messwerte im zeitlichen Verlauf eine Änderung erfahren, die einen vorbestimmten Schwellenwert übersteigt.

Wird in Schritt S103 ermittelt, dass kein Wellenbruch vorliegt, kehrt das Verfahren zurück zu Schritt S101.

Wird in Schritt S103 ermittelt, dass ein Wellenbruch vorliegt, schreitet das Verfahren zu Schritt S104 fort. In Schritt S104 werden Gegen- oder Schutzmaßnahmen eingeleitet, um die Folgen des Wellenbruchs zu mildern. Beispielsweise wird eine Treibstoffzufuhr der Turbomaschine 1 gedrosselt oder unterbrochen. Hierzu wird ein den Wellenbruch anzeigendes Signal ausgegeben.

Mit der beschriebenen Turbomaschine 1, den beschriebenen Anordnungen und dem beschriebenen Verfahren ist eine kontinuierliche Überwachung der Messwerte des Kraftsensors 13A oder der Kraftsensoren 13A, 13B, insbesondere durch die Auswerteeinheit 14, möglich. Dabei wird der ungestörte periodische Verlauf durch die vorbei rollenden Kugeln 123 erfasst. Dies ermöglicht wiederum eine Überprüfbarkeit der ordnungsgemäßen Funktion der Anordnung zur Erkennung eines Wellenbruchs bei laufendem Betrieb der Turbomaschine 1.

Ein weiterer Vorteil liegt darin, dass die Kraftsensoren 13A, 13B an einem vorderen Lager 12A, insbesondere am Fanlager angeordnet werden können. Im Bereich des vorderen Lagers 12A herrschen regelmäßig wesentlich niedrigere Temperaturen als im Bereich eines hinteren Lagers 11B, sodass die Kraftsensoren 13A, 13B nicht oder in geringerem Maße vor Hitze geschützt werden müssen und auch temperaturempfindliche Kraftsensortypen eingesetzt werden können.

Optional können die beschriebenen Anordnungen auch zur Messung der axialen Last an der Welle, insbesondere der Niederdruckwelle 11A, verwendet werden, z.B. zur Schubregelung und/oder zur Erkennung einer Degradation.

### Bezugszeichenliste

- 1: Turbomaschine
- 100: Gehäuse
- 101: Lufteinlauf
- 102: Verdichter
- 103: Brennkammer
- 104: Turbine
- 104A: Niederdruckturbine
- 104B: Hochdruckturbine
- 105: Düse
- 106: triebwerksfestes Bauteil
- 107: Fan
- 11A: Welle (Niederdruckwelle)
- 11B: Welle (Hochdruckwelle)
- 12A: Lager
- 12B: weiteres Lager
- 120: Außenring (stillstehendes Lagerteil)
- 121: erstes Innenringteil (drehbares Lagerteil)
- 122: zweites Innenringteil (drehbares Lagerteil)
- 123: Kugel
- 124: Käfig
- 13A: Kraftsensor
- 13B: weiterer Kraftsensor
- 14: Auswerteeinheit
- 140: Extremwertbestimmer
- 141: Komparator
- 15: Kraftstoffzufuhrsteuerung
- F: Kraft
- Fx: Axialkraftkomponente
- H: Hauptströmungsrichtung
- K: Kontaktbereich
- R: Rotationsachse

## Patentansprüche

1. Anordnung zur Erkennung eines Wellenbruchs, umfassend:
- eine Welle (11A, 11B) und
- ein Lager (12A), an dem die Welle (11A, 11B) um eine Rotationsache (R) drehbar gelagert ist,
**gekennzeichnet durch**
- einen oder mehrere am Lager (12A) angeordnete Kraftsensoren (13A, 13B), insbesondere Verformungssensoren, der oder die zur Messung einer von der Welle (11A, 11B) ausgeübten Axialkraftkomponente (Fx) parallel zur Rotationsache (R) der Welle (11A, 11B) eingerichtet ist oder sind, und
- eine Auswerteeinheit (14), die eingerichtet ist, Messwerte des oder der Kraftsensoren (13A, 13B) zu empfangen und anhand eines Vergleichs mehrerer Messwerte, insbesondere eines zeitlichen Verlaufs der Messwerte, zu ermitteln, ob eine Änderung der Axialkraftkomponente (Fx) vorliegt, um einen Wellenbruch der Welle (11A, 11B) zu erkennen, und die eingerichtet ist, ein Signal auszugeben, das einen Wellenbruch anzeigt, wenn sie einen Wellenbruch erkannt hat.

2. Anordnung nach Anspruch 1, **dadurch gekennzeichnet, dass** das Lager (12A) ein stillstehendes Lagerteil (120) und ein drehbares Lagerteil (121, 122) aufweist, wobei das drehbare Lagerteil (121, 122) gemeinsam mit der Welle (11A, 11B) bezüglich dem stillstehenden Lagerteil (120) um die Rotationsachse (R) der Welle (11A, 11B) drehbar ist.

3. Anordnung nach Anspruch 2, **dadurch gekennzeichnet, dass** der Kraftsensor (13A, 13B) am stillstehenden Lagerteil (120) angeordnet ist.

4. Anordnung nach Anspruch 3, **gekennzeichnet durch** einen weiteren, am Lager (12A) angeordneten Kraftsensor (13B), wobei der Kraftsensor (13A) und der weitere Kraftsensor (13B) an axial gegenüberliegenden Abschnitten des stillstehenden Lagerteils (120) angeordnet sind.

5. Anordnung nach Anspruch 4, **dadurch gekennzeichnet, dass** mehrere Kraftsensoren (13A) und mehrere weitere Kraftsensoren (13B) vorgesehen sind, wobei die Anzahl von Kraftsensoren (13A) gleich der Anzahl von weiteren Kraftsensoren (13B) ist.

6. Anordnung nach einem der vorhergehenden Ansprüche, **dadurch gekennzeichnet, dass** das Lager (12A) ein Schrägkugellager ist.

7. Anordnung nach einem der vorhergehenden Ansprüche, **dadurch gekennzeichnet, dass** die Auswerteeinheit (14) eingerichtet ist, anhand eines Vergleichs zumindest eines Messwerts des Kraftsensors (13A, 13B) mit einem vorbestimmten Vergleichswert festzustellen, ob eine Änderung der Axialkraftkomponente (Fx) vorliegt, um einen Wellenbruch der Welle zu erkennen.

8. Anordnung nach einem der vorhergehenden Ansprüche, **dadurch gekennzeichnet, dass** die Auswerteeinheit (14) ein Mittel (140) zur Bestimmung von Extremwerten eines periodischen Signalverlaufs der Messwerte des Kraftsensors (13A) oder des Kraftsensors (13A) und eines weiteren Kraftsensors (13B) umfasst.

9. Anordnung nach Anspruch 8, **dadurch gekennzeichnet, dass** die Auswerteeinheit (14) eingerichtet ist, anhand eines Vergleichs zumindest eines Extremwerts mit einem Vergleichswert festzustellen, ob eine Änderung der Axialkraftkomponente (Fx) vorliegt, um einen Wellenbruch der Welle zu erkennen.

10. Anordnung nach Anspruch 9, **dadurch gekennzeichnet, dass** der Vergleichswert ein vorangegangener Extremwert, ein Extremwert eines weiteren Kraftsensors (13B) oder ein vorgegebener oder vorgebbarer Schwellenwert ist.

11. Turbomaschine (1), insbesondere in Form eines Flugzeugtriebwerks, **gekennzeichnet durch** eine Anordnung nach einem der vorhergehenden Ansprüche.

12. Turbomaschine (1) nach Anspruch 11, **gekennzeichnet durch** eine Hauptströmungsrichtung (H), wobei das Lager (12A) bezüglich der Hauptströmungsrichtung (H) stromauf eines weiteren Lagers (12B), an dem die Welle (11A, 11B) um ihre Rotationsachse (R) drehbar gelagert ist, angeordnet ist.

13. Turbomaschine (1) nach einem der Ansprüche 11 oder 12, **dadurch gekennzeichnet, dass** das Lager (12A) ein Fanlager der Turbomaschine (1) ist.

14. Verfahren zur Erkennung eines Wellenbruchs einer Welle (11A, 11B), **gekennzeichnet durch** die folgenden Schritte:
- Bereitstellen (S100) einer an einem Lager (12A) um eine Rotationsachse (R) drehbar gelagerten Welle (11A, 11B), wobei am Lager (12A) ein oder mehrere Kraftsensoren (13A, 13B), insbesondere Verformungssensoren, angeordnet sind, der oder die zur Messung einer von der Welle (11A, 11B) ausgeübten Axialkraftkomponente (Fx) parallel zur Rotationsachse (R) der Welle (11A, 11B) eingerichtet ist oder sind;
- Erzeugen (S101) von Messwerten bezüglich der Axialkraftkomponente (Fx) mittels des oder der Kraftsensoren (13A, 13B);
- Ermitteln (S103), anhand eines Vergleichs mehrerer Messwerte, insbesondere eines zeitlichen Verlaufs der Messwerte, ob eine Änderung der Axialkraftkomponente (Fx) vorliegt, um einen Wellenbruch der Welle (11A, 11B) zu erkennen; und
- Ausgeben (S104) eines Signals, das einen Wellenbruch anzeigt, wenn ein Wellenbruch erkannt worden ist.

## Claims

1. Arrangement for detecting a shaft rupture, comprising:
- a shaft (11A, 11B), and
- a bearing (12A) on which the shaft (11A, 11B) is rotatably mounted about a rotational axis (R),
**characterized by**
- one or more force sensors (13A, 13B), in particular deformation sensors, which are arranged on the bearing (12A) and which is/are configured to measure an axial force component (Fx) which is applied by the shaft (11A, 11B), parallel to the rotational axis (R) of the shaft (11A, 11B), and
- an evaluation unit (14) which is configured to receive measured values of the force sensor or sensors (13A, 13B) and to determine, on the basis of a comparison of a plurality of measured values, in particular of a time profile of the measured values, whether there is a change in the axial force component (Fx), in order to detect a shaft rupture of the shaft (11A, 11B), and which is configured to output a signal which indicates a shaft rupture if said evaluation unit has detected a shaft rupture.

2. Arrangement according to Claim 1, **characterized in that** the bearing (12A) has a stationary bearing part (120) and a rotatable bearing part (121, 122), wherein the rotatable bearing part (121, 122) can rotate together with the shaft (11A, 11B) with respect to the stationary bearing part (120) about the rotational axis (R) of the shaft (11A, 11B) .

3. Arrangement according to Claim 2, **characterized in that** the force sensor (13A, 13B) is arranged on the stationary bearing part (120).

4. Arrangement according to Claim 3, **characterized by** a further force sensor (13B) which is arranged on the bearing (12A), wherein the force sensor (13A) and the further force sensor (13B) are arranged on axially opposite sections of the stationary bearing part (120).

5. Arrangement according to Claim 4, **characterized in that** a plurality of force sensors (13A) and a plurality of further force sensors (13B) are provided, wherein the number of force sensors (13A) is equal to the number of further force sensors (13B).

6. Arrangement according to one of the preceding claims, **characterized in that** the bearing (12A) is an angular ball bearing.

7. Arrangement according to one of the preceding claims, **characterized in that** the evaluation unit (14) is configured to determine, on the basis of a comparison of at least one measured value of the force sensor (13A, 13B) with a predetermined comparison value, whether there is a change in the axial force component (Fx), in order to detect a shaft rupture of the shaft.

8. Arrangement according to one of the preceding claims, **characterized in that** the evaluation unit (14) comprises a means (140) for determining extreme values of a periodic signal profile of the measured values of the force sensor (13A) or of the force sensor (13A) and of a further force sensor (13B).

9. Arrangement according to Claim 8, **characterized in that** the evaluation unit (14) is configured to determine, on the basis of a comparison of at least one extreme value with a comparison value, whether there is a change in the axial force component (Fx), in order to detect a shaft rupture of the shaft.

10. Arrangement according to Claim 9, **characterized in that** the comparison value is a preceding extreme value, an extreme value of a further force sensor (13B) or a specified or specifiable threshold value.

11. Turbomachine (1), in particular in the form of an aircraft engine, **characterized by** an arrangement according to one of the preceding claims.

12. Turbomachine (1) according to Claim 11, **characterized by** a main flow direction (H), wherein the bearing (12A) is arranged, with respect to the main flow direction (H), upstream of a further bearing (12B) on which the shaft (11A, 11B) is rotatably mounted about its rotational axis (R).

13. Turbomachine (1) according to one of Claims 11 and 12, **characterized in that** the bearing (12A) is a fan bearing of the turbomachine (1).

14. Method for detecting a shaft rupture of a shaft (11A, 11B), **characterized by** the following steps:
- making available (S100) a shaft (11A, 11B) which is rotatably mounted on a bearing (12A) about a rotational axis (R), wherein one or more force sensors (13A, 13B), in particular deformation sensors, are arranged on the bearing (12A) and is/are configured to measure an axial force component (Fx) which is applied by the shaft (11A, 11B), parallel to the rotational axis (R) of the shaft (11A, 11B);
- generating (S101) measured values with respect to the axial force component (Fx) by means of the force sensor or sensors (13A, 13B);
- determining (S103), on the basis of a comparison of a plurality of measured values, in particular a time profile of the measured values, whether there is a change in the axial force component (Fx), in order to detect a shaft rupture of the shaft (11A, 11B); and
- outputting (S104) a signal which indicates a shaft rupture if a shaft rupture has been detected.

## Revendications

1. Arrangement de reconnaissance d'une rupture d'arbre, comprenant :
- un arbre (11A, 11B) et
- un palier (12A) au niveau duquel l'arbre (11A, 11B) est monté à rotation autour d'un axe de rotation (R), **caractérisé par**
- un ou plusieurs capteurs de force (13A, 13B) disposés au niveau du palier (12A), notamment des capteurs de déformation, qui est ou sont conçus pour la mesure d'une composante de force axiale (Fx) parallèle à l'axe de rotation (R) de l'arbre (11A, 11B) qui est exercée par l'arbre (11A, 11B), et
- une unité d'évaluation (14) qui est conçue pour recevoir des valeurs mesurées du ou des capteurs de force (13A, 13B) et pour déterminer, à l'aide d'une comparaison de plusieurs valeurs mesurées, en particulier une évolution temporelle des valeurs mesurées, si une modification de la composante de force axiale (Fx) est présente en vue de reconnaître une rupture d'arbre de l'arbre (11A, 11B), et qui est conçue pour délivrer un signal qui indique une rupture d'arbre lorsqu'elle a reconnu une rupture d'arbre.

2. Arrangement selon la revendication 1, **caractérisé en ce que** le palier (12A) possède une partie de palier stationnaire (120) et une partie de palier rotative (121, 122), dans lequel la partie de palier rotative (121, 122) pouvant tourner conjointement avec l'arbre (11A, 11B) par rapport à la partie de palier stationnaire (120) autour de l'axe de rotation (R) de l'arbre (11A, 11B).

3. Arrangement selon la revendication 2, **caractérisé en ce que** le capteur de force (13A, 13B) est disposé au niveau de la partie de palier stationnaire (120) .

4. Arrangement selon la revendication 3, **caractérisé par** un capteur de force supplémentaire (13B) disposé au niveau du palier (12A), le capteur de force (13A) et le capteur de force supplémentaire (13B) étant disposés au niveau de portions axialement opposées de la partie de palier stationnaire (120).

5. Arrangement selon la revendication 4, **caractérisé en ce que** plusieurs capteurs de force (13A) et plusieurs capteurs de force supplémentaires (13B) sont présents, le nombre de capteurs de force (13A) étant le même que le nombre de capteurs de force supplémentaires (13B) .

6. Arrangement selon l'une des revendications précédentes, **caractérisé en ce que** le palier (12A) est un roulement à billes à portée oblique.

7. Arrangement selon l'une des revendications précédentes, **caractérisé en ce que** l'unité d'évaluation (14) est conçue pour constater, à l'aide d'une comparaison d'au moins une valeur mesurée du capteur de force (13A, 13B) avec une valeur comparative prédéterminée, si une modification de la composante de force axiale (Fx) est présente en vue de reconnaître une rupture d'arbre de l'arbre.

8. Arrangement selon l'une des revendications précédentes, **caractérisé en ce que** l'unité d'évaluation (14) comporte un moyen (140) servant à déterminer les valeurs extrêmes d'une courbe de signal périodique des valeurs mesurées du capteur de force (13A) ou du capteur de force (13A) et d'un capteur de force supplémentaire (13B) .

9. Arrangement selon la revendication 8, **caractérisé en ce que** l'unité d'évaluation (14) est conçue pour constater, à l'aide d'une comparaison d'au moins une valeur extrême avec une valeur comparative, si une modification de la composante de force axiale (Fx) est présente en vue de reconnaître une rupture d'arbre de l'arbre.

10. Arrangement selon la revendication 9, **caractérisé en ce que** la valeur comparative est une valeur extrême précédente, une valeur extrême d'un capteur de force supplémentaire (13B) ou une valeur de seuil prédéfinie ou pouvant être prédéfinie.

11. Turbomachine (1), notamment sous la forme d'un groupe motopropulseur d'aéronef, **caractérisée par** un arrangement selon l'une des revendications précédentes.

12. Turbomachine (1) selon la revendication 11, **caractérisée par** une direction de flux principal (H), le palier (12A) étant, en référence à la direction de flux principal (H), disposé en amont d'un palier supplémentaire (12B) au niveau duquel l'arbre (11A, 11B) est monté à rotation autour de son axe de rotation (R).

13. Turbomachine (1) selon l'une des revendications 11 et 12, **caractérisée en ce que** le palier (12A) est un palier de ventilateur de la turbomachine (1).

14. Procédé de reconnaissance d'une rupture d'arbre d'un arbre (11A, 11B), **caractérisé par** les étapes suivantes :
- fourniture (S100) d'un arbre (11A, 11B) monté à rotation autour d'un axe de rotation (R) au niveau d'un palier (12A), un ou plusieurs capteurs de force (13A, 13B) étant disposés au niveau du palier (12A), notamment des capteurs de déformation, qui est ou sont conçus pour la mesure d'une composante de force axiale (Fx) parallèle à l'axe de rotation (R) de l'arbre (11A, 11B) qui est exercée par l'arbre (11A, 11B) ;
- génération (S101) de valeurs mesurées concernant la composante de force axiale (Fx) au moyen du ou des capteurs de force (13A, 13B) ;
- détermination (S103), à l'aide d'une comparaison de plusieurs valeurs mesurées, en particulier une évolution temporelle des valeurs mesurées, si une modification de la composante de force axiale (Fx) est présente en vue de reconnaître une rupture d'arbre de l'arbre (11A, 11B) ; et
- délivrance (104) d'un signal qui indique une rupture d'arbre lorsqu'une rupture d'arbre a été reconnue.
